(19)

**Europäisches Patentamt**
**European Patent Office**
**Office européen des brevets**

(11) **EP 4 414 404 A1**

(12) **EUROPEAN PATENT APPLICATION**
published in accordance with Art. 153(4) EPC

(43) Date of publication:
**14.08.2024 Bulletin 2024/33**

(21) Application number: **22878577.0**

(22) Date of filing: **06.10.2022**

(51) International Patent Classification (IPC):
*C08G 63/16* $^{(2006.01)}$       *C08L 67/02* $^{(2006.01)}$

(52) Cooperative Patent Classification (CPC):
**C08G 63/16; C08L 67/02;** Y02W 90/10

(86) International application number:
**PCT/JP2022/037411**

(87) International publication number:
**WO 2023/058709 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2021   JP 2021164943
06.10.2021   JP 2021164945
06.10.2021   JP 2021164949**

(71) Applicant: **Mitsubishi Chemical Corporation
Chiyoda-ku
Tokyo 100-8251 (JP)**

(72) Inventors:
• **TANAKA, Shunsuke
Tokyo 100-8251 (JP)**
• **KUSUNO, Atsushi
Tokyo 100-8251 (JP)**
• **KATO, Satoshi
Tokyo 100-8251 (JP)**

(74) Representative: **Vossius & Partner
Patentanwälte Rechtsanwälte mbB
Siebertstrasse 3
81675 München (DE)**

(54) **RESIN, RESIN COMPOSITION, AND SHAPED OBJECT**

(57)     Provided is a resin containing a polybutylene succinate sebacate, characterized in that a content of an alkali metal is 0.001 mass ppm or more and 6.0 mass ppm or less. According to the present invention, it is possible to provide a polyester resin, a resin composition and a shaped object which achieve both biodegradability in seawater and hydrolysis resistance, which are contradictory properties, at high level.

EP 4 414 404 A1

**Description**

Technical Field

The present invention relates to a resin, a resin composition, and a shaped object.

Background Art

In modern society, plastics are used in a wide range of applications around us such as packaging materials, home appliance materials, and construction materials since they are lightweight, and are excellent in electrical insulation, moldability, and durability. Plastics used for these applications include polyethylene, polypropylene, polystyrene, polyvinyl chloride, polyethylene terephthalate, and the like.

However, the molded products of these plastics tend to remain underground even when they are buried after use, since they are difficult to be decomposed in natural environment. In addition, even when they are incinerated, harmful gas is possibly generated and may damage the incinerators.

Therefore, development of the biodegradable plastics which are easily decomposed by composting or the like, has been underway. As the plastics which exhibit biodegradability, for example, a copolymer of 3-hydroxybutyric acid and 3-hydroxyhexanoic acid (PHBH) is specifically known (Patent Literature 1).

Further, Patent Literature 2 discloses a copolymer having a specific viscosity obtained by condensation of a specific amount of succinic acid, C2 to C8 dicarboxylic acid, and 1,3-propanediol or 1,4-butanediol. The copolymer disclosed in Patent Literature 2 is a copolymer based on polybutylene succinate (PBS), and it is disclosed to have good mechanical properties and improved biodegradability compared to PBS.

Citation List

Patent Literature

PTL 1: WO2013/147139
PTL2: JP2012-504167A

Summary of Invention

Technical Problem

In recent years, marine pollution caused by plastics discarded in the ocean has become a major social problem. Therefore, if plastics having high biodegradability in seawater are developed, it is expected that the marine pollution problem caused by plastics will be solved. However, the above-mentioned biodegradable plastics are mainly focused on biodegradation in compost, and sufficient studies have not been conducted on plastics having high degradability in seawater where there are few plastic-decomposing bacteria.

On the other hand, when using plastics, it is usually required that they are difficult to deteriorate, and it is preferred that they have high hydrolysis resistance. Therefore, practically, it is desirable to develop plastics which have both biodegradability and hydrolysis resistance. However, since biodegradability and hydrolysis resistance are contradictory properties in terms of plastic degradation, it has been considered that it would be difficult to develop a plastic that had both properties.

In Patent Literature 1, a copolymer of 3-hydroxybutyric acid and 3-hydroxyhexanoic acid (PHBH), which is a biodegradable plastic that is easily decomposed by compost or the like, is disclosed. However, there is no disclosure or suggestion regarding biodegradation in the ocean, which is more challenging.

Further, in Patent Literature 2, a copolymer based on PBS is disclosed, and polybutylene succinate sebacate (PBSSe) is also disclosed. However, the evaluation of biodegradability in Patent Literature 2 is an evaluation in the compost soil, and is not an evaluation of biodegradability in the ocean.

Therefore, an object of the present description is to provide a resin, a resin composition, and a shaped object which achieve both biodegradability in seawater and hydrolysis resistance, which are contradictory properties, at high level.

Solution to Problem

The present inventors conducted intensive studies in view of the above circumstances. As a result, they focused on impurities in the resin containing polybutylene succinate sebacate (hereinafter sometimes referred to as "PBSSe"), which is a biodegradable polyester, and found that certain impurities have an effect on biodegradability and hydrolysis resistance. Namely, they found that the above issue can be solved by controlling the content of the impurities in PBSSe, and completed the present invention.

The gist of the present invention is as follows.

[1] A resin containing a polybutylene succinate sebacate,
in which a content of an alkali metal is 0.001 mass ppm or more and 6.0 mass ppm or less.
[2] The resin according to the above item [1],
in which the S/Se, which is a ratio of the number of the groups derived from succinic acid to the number of the groups derived from sebacic acid constituting the polybutylene succinate sebacate, is within a range of 71/29 to 95/5.
[3] The resin according to the above item [1],
in which the S/Se, which is a ratio of the number of the groups derived from succinic acid to the number of the groups derived from sebacic acid constituting the polybutylene succinate sebacate, is within a range of 71/29 to 89/11.
[4] The resin according to any one of the above items [1] to [3],
in which an acid value is 50 eq/t or less.
[5] The resin according to any one of the above items [1] to [4],
in which a content of sulfur atoms is 4.0 mass ppm or less.
[6] The resin according to any one of the above items [1] to [5],
in which a weight-average molecular weight is 10,000 or more and 2,500,000 or less.
[7] The resin according to any one of the above items [1] to [6],
in which a reduced viscosity at 30 °C is 0.5 dL/g or more and 4.0 dL/g or less.
[8] A resin composition containing the resin according to any one of the above items [1] to [7].
[9] A shaped object containing the resin according to any one of the above items [1] to [7].

Advantageous Effects of Invention

According to the present invention, it is possible to provide a resin, a resin composition and a shaped object which achieve both biodegradability in seawater and hydrolysis resistance, which are contradictory properties, at high level.

Description of Embodiments

Embodiments of the present invention will be described in detail below. Note that the present invention is not limited to the following description, and modifications can be arbitrarily made, without departing from the gist of the present invention. In this description, when "to" is used to express numerical values or physical property values before and after it, it is assumed that the values before and after it are included.

[Resin]

One embodiment of the present invention is a resin containing: a polybutylene succinate sebacate, characterized in that a content of an alkali metal is 0.001 mass ppm or more and 6.0 mass ppm or less. The alkali metal is usually contained in polybutylene succinate sebacate as an impurity, and it is possible to improve biodegradability in seawater while maintaining hydrolysis resistance by setting the content of the alkali metal to between 0.001 mass ppm or more and 6.0 mass ppm or less.

Biodegradability in seawater and hydrolysis resistance are considered to be a contradictory relation in terms of the degradability of polyester. Further, it is known that when the content of alkali metals or sulfur atoms is high or the acid value is high, the hydrolysis resistance of polyester decreases (Non Patent Literature 1, Patent Literatures 2 to 8). Therefore, the present inventors conducted studies to improve biodegradability in seawater by increasing the content of the alkali metals. However, surprisingly, it has been found that by reducing the content of the alkali metals, biodegradability in seawater can be improved and hydrolysis can also be suppressed. Alkali metals are generally recognized to be effective in promoting hydrolysis. Under these circumstances, it can be said that it is an unexpected and remarkable effect that for biodegradability in seawater, the degradation is rather promoted by the low content of the alkali metals.

Non Patent Literature 1; Saturated Polyester Handbook (edited by Kazuo Yuki, Nikkan Kogyo Shimbun, first edition published December 22, 1989), Patent Literature 2; JPS63-225623A, Patent Literature 3; JPS56-81334A, Patent Literature 4; JP4380704B, Patent Literature 5; JP2002-206058A, Patent Literature 6; JP2012-505271A, Patent Literature 7; JP 2011-208008A, Patent Literature 8; Japanese Patent Application No.2012-149176

<Polybutylene succinate sebacate (PBSSe)>

PBSSe is a polyester obtained by polycondensation by using 1,4-butanediol as diol, and using a mixed acid of succinic acid or its alkyl ester (hereinafter collectively referred to as the "succinic acid component") and sebacic acid or its alkyl ester (hereinafter collectively referred to as "sebacic acid component") as dicarboxylic acid or its alkyl ester (hereinafter collectively referred to as the "dicarboxylic acid component"). Namely, PBSSe is a polyester having a group derived from 1,4-butanediol (1,4-butanediol unit), a group derived from succinic acid component (succinic acid unit), and a group derived from sebacic acid component (sebacic acid unit).

Regarding the ratio (S/Se, molar ratio) of the number of groups derived from succinic acid component to the number of groups derived from sebacic acid component which constitutes PBSSe of the present invention, it is preferable that the number of groups derived from sebacic acid is large, from the viewpoint of both lowering the crystallinity of PBSSe and increasing the biodegradation rate. On the other hand, it is preferable that the number of groups derived from succinic acid component is large, from the viewpoint that heat resistance and hydrolysis resistance can easily be obtained. Namely, when S/Se (molar ratio) is within the specific range, the balance between biodegradability in seawater and hydrolysis resistance is good.

Specifically, S/Se (molar ratio) is preferably 71/29 or more, more preferably 74/26 or more, even more preferably 76/24 or more, particularly preferably 81/19 or more. Further, on the other hand, it is preferably 95/5 or less, more preferably 89/11 or less. Namely, S/Se (molar ratio) is preferably 71/29 to 95/5, more preferably 71/29 to 89/11, even more preferably a range of 74/26 to 89/11, even further preferably 76/24 to 89/11, particularly preferably 81/19 to 89/11.

Note that as the dicarboxylic acid unit of PBSSe, it is constituted by a succinic acid unit and a sebacic acid unit as described above, but it may contain a small amount of other dicarboxylic acid units as long as it does not impair the effects of the present invention. Specifically, the other dicarboxylic acid unit is preferably 10 mol% or less, more preferably 5 mol% or less, and even more preferably 1 mol% or less, based on the total dicarboxylic acids. There is no particular limitation on the lower limit value, and it may be 0 mol% (not including other dicarboxylic acids).

(Alkali metal)

It is important that the PBSSe of the present invention has a content of alkali metal (metal equivalent) of 0.001 mass ppm or more and 6.0 mass ppm or less. By setting the content of alkali metal to 6.0 mass ppm or less, a resin which can achieve both biodegradability in seawater and hydrolysis resistance at high level, can be obtained. From the above viewpoint, the content of alkali metal is preferably 3.0 mass ppm or less, and more preferably 2.0 mass ppm or less. The content of the alkali metal is preferably as low as possible, but it is 0.001 mass ppm or more since the purification cost can be inexpensive. Note that the content of alkali metal can be measured by the method described in Examples.

Examples of alkali metals include lithium, sodium, potassium, and the like. Among these, sodium and potassium are likely to be contaminated as impurities, and sodium is most likely to be contaminated. Therefore, reducing the content of sodium, which is likely to be contaminated, is considered effective in achieving both biodegradability in seawater and hydrolysis resistance.

The main contamination route of alkali metals is considered to be derived from raw materials, and when bio-based raw materials are used, there is a possibility of contamination from any of the raw materials of 1,4-butanediol, succinic acid components, and sebacic acid components, however, it is considered to be mainly derived from the sebacic acid component. Therefore, as a method for reducing the content of alkali metals such as sodium, it is considered preferable to reduce the content of alkali metals in the sebacic acid component by purifying or the like of the sebacic acid component.

The content of alkali metal contained in the raw material sebacic acid component is preferably 30 mass ppm or less, more preferably 10 mass ppm or less, even more preferably 5 mass ppm or less, and particularly preferably 1 mass ppm or less. The content of alkali metal contained in the raw material sebacic acid component is preferably as low as possible, but it is usually 0.001 mass ppm or more when considering the fact that the cost of purifying the raw material can be inexpensive, or the like.

Further, the content of alkali metal contained in the PBSSe of the present invention can also be reduced by purifying the resin after polymerization.

(Sulfur atom)

The content of sulfur atoms in PBSSe is also preferably small from the viewpoint of achieving both biodegradability in seawater and hydrolysis resistance. Specifically, the content of sulfur atom contained in PBSSe is preferably 4.0 mass ppm or less. By setting the content of sulfur atom to 4.0 mass ppm or less, a resin which can achieve both biodegradability in seawater and hydrolysis resistance at high level, can be obtained. From the above viewpoint, the content of sulfur atom is preferably 3.0 mass ppm or less, more preferably 2.0 mass ppm or less, and particularly preferably 1.0 mass ppm or less. The content of the sulfur atom is preferably as low as possible, and the lower limit value is not limited, however it is usually 0.001 mass ppm or more since the purification cost can be inexpensive. Note that the content of sulfur atom can be measured by the method described in Examples.

Sulfur atoms are contaminated into PBSSe as impurities. The main contamination route of sulfur atoms is considered to be derived from raw materials, and when bio-based raw materials are used, there is a possibility of contamination from any of the raw materials of 1,4-butanediol, succinic acid components, and sebacic acid components, however, it is considered to be mainly derived from the sebacic acid component. Therefore, as a method for reducing the content of sulfur atom, it is considered preferable to reduce the content of sulfur atom in the sebacic acid component by purifying the sebacic acid component or the like.

The content of sulfur atom contained in the raw material sebacic acid component is preferably 30 mass ppm or less, more preferably 10 mass ppm or less, still more preferably 5 mass ppm or less, and particularly preferably 1 mass ppm or less. The content of sulfur atom contained in the raw material sebacic acid component is preferably as low as possible, but it is usually 0.001 mass ppm or more when considering the fact that the cost of purifying the raw material can be inexpensive, or the like.

<Physical properties of PBSSe>

(Acid value)

In the present invention, the acid value (AV) of PBSSe is preferably 50 eq/t or less. The acid value of the PBSSe of the present invention is preferably low in the viewpoint that biodegradability in seawater can be easily improved while maintaining hydrolysis resistance. Therefore, it is more preferably 40 eq/t or less, and even more preferably 30 eq/t or less.

The lower limit value of the acid value of PBSSe is preferably 0.1 eq/t or more, more preferably 1 eq/t or more, from the viewpoint of manufacturing costs and the like. The acid value of PBSSe is lower when there are fewer carboxylic acid terminals derived from unreacted dicarboxylic acid components, and is higher when there are more. Therefore, it can be adjusted by adjusting the polymerization conditions and the like. It is considered that it also can be adjusted by the type and content of impurities in the raw materials, such as nitrogen compounds and metal ions.

As described above, the acid value of PBSSe can be controlled by changing conditions such as polymerization temperature and polymerization time, and by the type of impurities and by reducing amount of impurities, and PBSSe with a desired acid value can be obtained.

Note that the acid value can be measured by the method described in Examples.

(Glass transition temperature (Tg))

When biodegrading PBSSe, it is considered that the molecular main chain can rotate and vibrate since the glass transition temperature is lower than the temperature of the environment such as seawater, in which the resin is placed, and biodegradation can easily be promoted. Therefore, the glass transition temperature (Tg) of PBSSe according to the present invention is preferably 40 °C or lower, more preferably 30 °C or lower, even more preferably 25 °C or lower, and particularly preferably 20 °C or lower. Note that the glass transition temperature of PBSSe can be measured by thermal analysis method.

(Reduced viscosity)

The reduced viscosity of PBSSe may be appropriately selected depending on the application, molding method, and the like. Specifically, the reduced viscosity ,$\eta_{sp}$/c, of PBSSe at 30 °C is preferably 0.5 dL/g or more, more preferably 0.8 dL/g or more, even more preferably 1.0 dL/g or more, and particularly preferably 1.2 dL/g or more. On the other hand, it is preferably 4.0 dL/g or less, more preferably 3.0 dL/g, even more preferably 2.5 dL/g or less, particularly preferably 2.3 dL/g or less.

By setting the reduced viscosity of PBSSe within the above range, it is possible to ensure mechanical properties when processing into a shaped object, and the melt viscosity of the biodegradable resin composition during molding is such that it does not impose an excessive load on a molding machine such as an extruder or an injection machine, and productivity can also be ensured.

Note that the reduced viscosity of PBSSe can be measured by the method described in Examples.

(Molecular weight)

The molecular weight of PBSSe is usually measured by gel permeation chromatography (GPC). From the viewpoint of moldability and mechanical strength, the weight-average molecular weight (Mw) of PBSSe, relative to monodisperse polystyrene standards, is preferably in the following range. Namely, the weight-average molecular weight (Mw) is preferably 10,000 or more, more preferably 20,000 or more, even more preferably 30,000 or more, and particularly preferably 50,000 or more. Furthermore, on the other hand, it is preferably 2,500,000 or less, more preferably 1,000,000 or less, still more preferably 800,000 or less, particularly preferably 600,000 or less, more particularly preferably 500,000 or less, and most preferably 400,000 or less.

(Melt flow rate (MFR))

The melt flow rate (MFR) of PBSSe can be evaluated as a value measured at 190 °C and a load of 2.16 kg based on JIS K 7210 (1999).

The MFR of PBSSe is preferably within the following range from the viewpoint of moldability and mechanical strength. Specifically, it is preferably 0.1 g/10 minutes or more, and more preferably 1 g/10 minutes or more. Furthermore, on the other hand, MFR of PBSSe is preferably 100 g/10 minutes or less, more preferably 80 g/10 minutes or less, still more preferably 50 g/10 minutes or less, particularly preferably 40 g/10 minutes or less, and most preferably 30 g/10 minutes or less. Note that the MFR of the resin can be adjusted by the molecular weight and the like.

(Melting point)

The melting point of PBSSe is preferably within the following range from the viewpoint of moldability. Namely, the melting point of PBSSe is preferably 60 °C or higher, more preferably 70 °C or higher, even more preferably 75 °C or higher, particularly preferably 80 °C or higher. Furthermore, on the other hand, it is preferably 270 °C or lower, more preferably 200 °C or lower, even more preferably 160 °C or lower, particularly preferably 150 °C or lower, significantly preferably 140 °C or lower, most preferably 130 °C or lower. Note that, when PBSSe has a plurality of melting points, it is sufficient that at least one melting point is within the above range.

(Tensile modulus)

The tensile modulus of PBSSe is preferably within the following range from the viewpoint of moldability and impact resistance strength. Namely, it is preferably 10 MPa or more, more preferably 100 MPa or more, even more preferably 180 MPa or more. Further, on the other hand, it is preferably 2500MPa or less, more preferably 2000 MPa or less.

The tensile modulus of PBSSe can be measured by the following method.

A heat-press sheet of PBSSe is produced and punched into a punched into a dumbbell-like No. 8 shape to produce a test piece. Specifically, a metal frame which is subjected to a surface release treatment, is placed on a 150 mm × 150 mm PTFE sheet, 1.6 g of PBSSe is measured and placed inside this metal frame, and a 150 mm × 150 mm PTFE sheet is additionally placed on it. The PBSSe sandwiched between the PTFE sheets was sandwiched between two iron plates (160 mm × 160 mm, 3 mm thickness) and then heat pressed using a heat press machine, followed by cooling press using a cooling press machine to obtain a heat-press sheet of 70 mm × 70 mm × 0.1 mm thickness. The heat press temperature is 200 °C, and the heat press time is 2 minutes for preheating and 2 minutes for pressing. Further, the cooling press temperature is 20 °C, and the cooling press time is 2 minutes. This heat-press sheet is uniaxially stretched at a rate of 50 mm/min, and the initial slope of the resulting stress-strain curve is determined as the tensile modulus.

Note that the method for adjusting the melting point and tensile modulus of PBSSe is not particularly limited. For example, it can be adjusted by adjusting the copolymerization ratio of copolymer components.

[Resin composition]

The resin composition according to this embodiment is a resin composition containing the above-mentioned PBSSe as a main component. The main component in the resin composition is preferably 50% by mass or more, more preferably 70% by mass or more, and even more preferably 90% by mass or more. Note that as the resin, total amount (100% by mass) may be PBSSe.

<Other Components>

The resin composition according to the present embodiment may contain various additives and the like, as long as the effects of the present invention are not significantly impaired.

[Manufacturing method of PBSSe]

As a manufacturing method of PBSSe, a known method for producing polyester can be adopted. Moreover, the suitable conditions employed conventionally can be used for the polycondensation reaction at this time, and is not particularly limited. Usually, a method, in which the degree of polymerization is further increased by applying vacuum after the esterification reaction was proceeded, is employed.

Specifically, 1,4-butanediol, a succinic acid component, and a sebacic acid component are mixed so as to be the desired S/Se, heated under nitrogen with stirring, and then raised temperature under reduced pressure, reacted at a constant temperature for a certain period of time. Note that the diol and the dicarboxylic acid component usually react in substantially equimolar amounts, however the diol is usually used in excess of the dicarboxylic acid component by 1 mol% to 30 mol% since a portion of the diol is distilled out during the esterification reaction.

It is preferable that the polymer obtained by the reaction is extruded into water in the form of a strand, and cut to obtain PBSSe in the form of pellets.

The molar ratio (S/Se) of units derived from the succinic acid component/units derived from the sebacic acid component of PBSSe can be determined by $^1$H-NMR (nuclear magnetic resonance spectroscopy) method.

<Raw material>

1,4-butanediol, succinic acid component, and sebacic acid component which are raw materials, may be derived from petroleum or plants, however it is preferable that they are derived from plants since environmental issues can be considered. In particular, sebacic acid is known to be obtainable from castor oil, and it is preferably sebacic acid derived from plants.

However, a raw material derived from plants generally contain a large amount of impurities and require high purification costs, so high-purity products are often expensive. As mentioned above, it was known that the hydrolysis resistance of polyester decreases when the content of alkali metals and sulfur atoms is high, or when the acid value is high. Therefore, it was considered that inexpensive low-purity products are usually suitable to obtain the high biodegradable polyester.

However, in the PBSSe of the present invention, as mentioned above, it is important that the content of alkali metals, which are impurities, is reduced, therefore it is preferable to use raw materials with a higher degree of purification and a lower amount of impurities.

The purification method is not particularly limited as long as it can reduce the content of alkali metal in raw materials such as sebacic acid, and conventionally known methods can be used. Specifically, there are methods such as distillation, extraction, and crystallization, however the crystallization method is preferred since it is simple and efficient.

Further, a small amount of a polyfunctional compound may be used as a raw material for producing PBSSe. Specific examples of the polyfunctional compound include trifunctional or higher functional polyhydric alcohols, trifunctional or higher functional polycarboxylic acids and/or their anhydrides, and trifunctional or higher functional oxycarboxylic acids. Only one type of polyfunctional compound may be used alone, or two or more types may be used in any combination and ratio.

Specific examples of the trifunctional or higher functional polyhydric alcohol include glycerin, trimethylolpropane, pentaerythritol, and the like.

Specific examples of the trifunctional or higher functional polycarboxylic acid or its anhydride include propanetricarboxylic acid, pyromellitic anhydride, benzophenonetetracarboxylic anhydride, cyclopentanetetracarboxylic anhydride, and the like.

Specific examples of trifunctional or more functional oxycarboxylic acids include malic acid, hydroxyglutaric acid, hydroxymethylglutaric acid, tartaric acid, citric acid, hydroxyisophthalic acid, hydroxyterephthalic acid, and the like. Among these, malic acid, tartaric acid, citric acid, and mixtures thereof are preferred because of their ease of availability.

When using a polyfunctional compound, it is preferable that the amount used is small from the viewpoint of difficulty in gel formation. Specifically, based on 100 mol% of all monomer units constituting the polyester, it is usually 5 mol% or less, preferably 1 mol% or less, more preferably 0.50 mol% or less, particularly preferably 0.3 mol% or less. On the other hand, from the viewpoint of ease of manufacturing PBSSe with a high degree of polymerization, the amount used is usually 0.0001 mol% or more, preferably 0.001 mol% or more, more preferably 0.005 mol% or more, particularly preferably 0.01 mol% or more.

<Catalyst>

PBSSe is usually produced in the presence of a catalyst. As the catalyst, any known catalyst that can be used for producing polyester resins can be selected as long as it does not significantly impair the effects of the present invention. For example, metal compounds such as germanium, titanium, zirconium, hafnium, antimony, tin, magnesium, calcium, and zinc are suitable. Among these, germanium compounds and titanium compounds are more preferred. Only one type of catalyst may be used alone, or two or more types may be used in any combination and ratio. Further, catalysts other than these may be used in combination as long as the purpose of the present invention is not impaired.

Examples of germanium compounds that can be used as catalysts include organic germanium compounds such as tetraalkoxygermanium, and inorganic germanium compounds such as germanium oxide and germanium chloride. Among these, germanium oxide, tetraethoxygermanium, tetrabutoxygermanium, and the like are preferred, and germanium oxide is more preferred from the viewpoint of price, ease of availability and the like.

Examples of titanium compounds that can be used as catalysts include organic titanium compounds such as tetraalkoxytitanium such as tetrapropyl titanate, tetrabutyl titanate, and tetraphenyl titanate. Among these, tetrapropyl titanate and tetrabutyl titanate are preferred from the viewpoint of price, ease of availability, and the like.

The amount of the catalyst to be used is arbitrary as long as it does not significantly impair the effects of the present invention, however it is usually 0.0005% by mass or more, preferably 0.001% by mass or more, based on the amount of monomers used. In addition, on the other hand, it is usually 3 % by mass or less, and more preferably 1.5 % by mass or less. By controlling the amount of catalyst within the above range, a sufficient catalytic effect can be obtained while reducing manufacturing costs, and coloration and decrease in hydrolysis resistance of the resulting polymer can be suppressed, and high biodegradability in seawater can be exhibited.

The timing of introduction of the catalyst is not particularly limited as long as it is before the polycondensation reaction, and it may be introduced at the time of charging the raw materials or at the start of pressure reduction.

Metals in the catalyst may be contained in PBSSe as impurities. The content of metals derived from the catalyst in PBSSe is also preferably small from the viewpoint of achieving both biodegradability in seawater and hydrolysis resistance. Specifically, the content of metals derived from the catalyst contained in PBSSe is preferably 200 mass ppm or less, more preferably 100 mass ppm or less, even more preferably 70 mass ppm or less, and particularly preferably 50 mass ppm or less. The lower limit value is not particularly limited, but is usually 0.001 mass ppm or more. In particular, the content of magnesium in PBSSe is preferably within the above range. Note that the content of magnesium atom can be measured by the method described in Examples.

<Reaction condition>

The reaction conditions such as temperature, polymerization time, pressure during the esterification reaction and/or transesterification reaction of the dicarboxylic acid component with the diol are arbitrary as long as they do not significantly impair the effects of the present invention. However, the reaction temperature of the esterification reaction and/or transesterification reaction of the dicarboxylic acid component with the diol is usually 150 °C or higher, preferably 180 °C or higher, and usually 260 °C or lower, preferably 250 °C or lower. Further, the reaction atmosphere is usually an inert atmosphere such as nitrogen or argon. The reaction pressure is usually ambient pressure to 10 kPa, however among these, ambient pressure is preferred. Further, the reaction time is usually 1 hour or more, and usually 10 hours or less, preferably 6 hours or less, and more preferably 4 hours or less. By setting the reaction conditions within the above range, gelation due to excessive production of unsaturated bonds can be suppressed, and the degree of polymerization can be controlled.

Further, the pressure in the polycondensation reaction after the esterification reaction and/or transesterification reaction of the dicarboxylic acid component with the diol is usually carried out under a vacuum degree of $0.01 \times 10^3$ Pa or more, preferably $0.03 \times 10^3$ Pa or more, and usually $1.4 \times 10^3$ Pa or less, preferably $0.4 \times 10^3$ Pa or less. Further, the reaction temperature at this time is usually 150 °C or higher, preferably 180 °C or higher, and usually 260 °C or lower, preferably 250 °C or lower. Further, the reaction time is usually 2 hours or more, and usually 15 hours or less, preferably 10 hours or less. By setting the reaction conditions within the above range, gelation due to excessive production of unsaturated bonds can be suppressed, and the degree of polymerization can be controlled.

<Chain extender>

Chain extenders such as carbonate compounds and diisocyanate compounds can also be used during manufacturing PBSSe. When chain extenders are used, since heterogeneous bonds such as carbonate bonds and urethane bonds are incorporated into the chains, which may affect biodegradability, it is preferable not to use it, and even when it is used, it is preferable to use a small amount, from the viewpoint of ensuring the degradability of PBSSe.

When using a chain extender, the amount used is usually 10 mol% or less, preferably 5 mol% or less, more preferably 3 mol%, as a total ratio of carbonate bonds and urethane bonds with respect to all constituent units constituting PBSSe. Furthermore, from the viewpoint of biodegradability of PBSSe, the carbonate bond is preferably less than 1 mol%, more preferably 0.5 mol% or less, and even more preferably 0.1 mol% or less, with respect to all constituent units constituting PBSSe. The urethane bond is preferably 0.55 mol% or less, more preferably 0.3 mol% or less, even more preferably 0.12 mol% or less, and particularly preferably 0.05 mol% or less. When this amount is converted to mass % with respect to PBSSe, it is preferably 0.9 mass % or less, more preferably 0.5 mass % or less, still more preferably 0.2 mass % or less, and particularly preferably 0.1 mass % or less. In particular, by setting the amount of urethane bonds within the above range, smoke and odor caused by the decomposition of urethane bonds can be suppressed during the film forming process, and film breakage due to foaming in the molten film can be suppressed, therefore molding stability can be ensured. The amount of carbonate bond or urethane bond in the polyester resin can be calculated from the results of measurement by NMR methods (nuclear magnetic resonance spectroscopy) such as $^{1}$H-NMR and $^{13}$C-NMR methods.

Specific examples of carbonate compounds as chain extenders include diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, dicyclohexyl carbonate and the like. In addition, carbonate compounds derived from hydroxy compounds such as phenols and alcohols can also be used.

Specifically, the diisocyanate compound includes known diisocyanates such as 2,4-tolylene diisocyanate, a mixture of 2,4-tolylene diisocyanate and 2,6-tolylene diisocyanate, 1,5-naphthylene diisocyanate, xylylene diisocyanate, hydrogenated xylylene diisocyanate, hexamethylene diisocyanate, isophorone diisocyanate, 4,4'-dicyclohexylmethane diisocyanate, tetramethylxylylene diisocyanate, 2,4,6-triisopropylphenyl diisocyanate, 4,4'-diphenylmethane diisocyanate, and tolidine diisocyanate.

Further, as other chain extenders, dioxazoline, silicate ester, and the like may be used.

Specific examples of the silicate ester include tetramethoxysilane, dimethoxydiphenylsilane, dimethoxydimethylsilane, diphenyldihydroxysilane, and the like.

[Method of producing resin composition]

A method of producing resin composition of the present embodiment is not particularly limited. The resin composition according to this embodiment can be obtained by kneading PBSSe, other resins, additives, and the like.

[Shaped object]

The shaped object of the resin and resin composition according to this embodiment can be obtained by molding the resin or resin composition according to this embodiment by various molding methods used for general-purpose plastics.

The shaped object of the resin and resin composition according to the present embodiment can be suitably used in a wide range of applications, including packaging materials for packaing liquids, powders and solids of various foods, medicines and miscellaneous goods, agricultural materials, and construction materials. Specific applications include injection molded products (for example, fresh food trays, fast food containers, coffee capsule containers, cutlery, outdoor leisure products, etc.), extrusion shaped object (for example, films, sheets, fishing lines, fishing nets, vegetation nets, sheets for secondary processing, water retention sheets, etc.), hollow molded bodies (bottles, etc.), and the like. In addition, other agricultural films, coating materials, fertilizer coating materials, seedling pots, laminate films, boards, stretched sheets, monofilaments, nonwoven fabrics, flat yarns, staples, crimped fibers, striped tapes, split yarns, composite fibers, blow-molded bottles, shopping bags, garbage bags, compost bags, cosmetic containers, detergent containers, bleach containers, ropes, binding materials, sanitary cover stock materials, cold boxes, cushioning films, multifilaments, synthetic paper, applications for medical such as surgical threads, sutures, artificial bones, artificial skin, DDS (Drug Delivery System) such as microcapsules, and wound dressings are exemplified. The shaped object is particularly suitable as a food packaging film, a fresh food tray, a fast food container, a lunch box, and other food containers.

Examples

Hereinafter, the content of the present invention will be explained in more detail using Examples and Comparative Examples. The present invention is not limited to the following examples without departing from the gist of the present invention. The values of various manufacturing conditions or evaluation results in the following examples have the meaning of preferable upper or lower limits in the embodiments of the present invention, and a preferable range may be a range defined by the above-mentioned upper limit value or lower limit value and the value of the following example or a combination of the values between the examples.

<Measurement method of content>

(Metallic element)

It was measured by high-frequency inductively coupled plasma emission spectrometry. After wet decomposition, the volume of the sample was fixed, and the alkali metal content was measured using ICP-AES ("iCAP7600 Duo" manufactured by Thermo Fisher Scientific).

(Sulfur atom)

It was measured by ion chromatography. The sample was burned in a combustion absorption device (Nitto Seiko Analytech Co., Ltd. "AQF2100H"), and the sulfate ions in the absorption liquid in which the generated gas is absorbed, were measured using an ion chromatograph ("Dionex ICS1600" manufactured by Thermo Fisher Scientific, with AS12A column).

<Measurement method of physical property>

(Acid value (AV))

0.4 g of PBSSe was accurately weighed, 25 mL of benzyl alcohol was added thereto, and the mixture was dissolved by heating to 195 °C and stirring. Once PBSSe was dissolved, the container containing the PBSSe solution was cooled in an ice bath, and 2 mL of ethanol was added into the container. Titration was performed using a 0.01N benzyl alcohol solution of sodium hydroxide using an automatic titrator "GT200" manufactured by Mitsubishi Chemical Analytech (the titration amount is defined as A (ml)).

Next, a similar measurement was performed using only benzyl alcohol, and a blank value (B (ml)) was obtained. The acid value (equivalent per ton) was calculated from the following formula.

$$\text{Acid value (eq/t)} = (A\text{-}B) \times F \times 10/W$$

A (ml): Measured titration amount
B (ml): Blank titration amount
F: Factor of 0.01N NaOH benzyl alcohol standard solution
W (g): Sample mass

(Reduced viscosity)

PBSSe was dissolved in a 1:1 (mass ratio) mixed solvent of phenol and tetrachloroethane at a concentration of 0.5 g/dL to prepare a resin solution. Next, the passage time of the resin solution was measured at 30 °C using an Ubbelohde viscometer, and the reduced viscosity ($\eta_{sp}/c$, unit; dL/g) was calculated based on the result.

(Reduced viscosity retention ratio)

PBSSe pellets obtained by cutting the resin extruded into a form of a strand were allowed to stand for 29 days under constant temperature and constant humidity conditions of a temperature of 40 °C and a relative humidity of 90% RH. The reduced viscosity before and after the constant temperature and constant humidity treatment was measured, and the reduced viscosity retention was calculated by substituting it into the following formula (1). The closer the reduced viscosity retention ratio is to 100%, the better the hydrolysis resistance of the resin is.

Note that the reduced viscosity retention ratio of Comparative Example 1 is a predicted value calculated based on the initial viscosity since the reduced viscosity before treatment was unknown.

$$\text{Reduced viscosity retention ratio (\%)} = \frac{\text{Reduced viscosity after treatmet (dL/g)}}{\text{Reduced viscosity before treatmet (dL/g)}} \times 100 \quad \cdots (1)$$

<Biodegradability test>

The biodegradability was calculated as the ratio of biological oxygen demand (BOD) to theoretical oxygen demand (ThOD). Specifically, regarding biodegradation in seawater, it was measured in accordance with ISO 14851:1999 (Determination of the ultimate aerobic biodegradability of plastic materials in an aqueous medium-Method by analysis of evolved carbon dioxide).

To a 510 mL brown bottle containing 30 mg of the sample, 100 mL of a mixture of standard test culture solution prepared in accordance with ISO 14851 and seawater was added. A pressure sensor (manufactured by WTW, OxiTop (registered trademark)-C type) was attached to a brown bottle, and the test solution was stirred with a stirrer for 19 days in a constant temperature environment of 25 °C, and the biodegradability (%) was calculated based on BOD measurement. In the table, it is expressed as biodegradability in seawater.

The biodegradability tests of Example 1 and Comparative Example 1 are the results evaluated using the same seawater on the same day, and the biodegradability tests of Example 2 and Comparative Example 2 are the results evaluated using the same seawater collected on a different day of Example 1. Therefore, the results of Example 1 and Comparative Example 1 can be directly compared, and the results of Example 2 and Comparative Example 2 can be directly compared.

<Example 1>

<Manufacturing of PBSSe>

In a reaction vessel equipped with a stirring device, a nitrogen inlet, a heating device, a thermometer, and a pressure reduction port, 43.0 parts by mass of succinic acid, 9.0 parts by mass of sebacic acid, 48.0 parts by mass of 1,4-butanediol, and 0.10 parts by mass of trimethylolpropane were charged. The sebacic acid used here contained 0.94 mass ppm of sodium atoms and 0.68 mass ppm of sulfur atoms. Further, the molar ratio of succinic acid/sebacic acid was 89/11.

While stirring the contents of the reaction vessel, nitrogen gas was introduced into the vessel, and the inside of the system was replaced under reduced pressure to be brought into a nitrogen atmosphere. Next, the contents of the reaction vessel were heated from 160 °C to 230 °C for 1 hour while stirring, and reacted at 230 °C for 1 hour. Thereafter, per polyester to be obtained, tetrabutyl titanate in an amount of 70 mass ppm as titanium atoms and magnesium acetate in an amount of 33 mass ppm as magnesium atoms were added, and the pressure reduction was started so as to be $0.07 \times 10^3$ Pa or less over 1.5 hours. Furthermore, after 30 minutes passed from the start of the pressure reduction, the temperature was raised to 250 °C over 30 minutes, and polycondensation was continued while maintaining the heated and depressurized state. The polymerization was completed 2 hours and 20 minutes after reaching 250 °C, and PBSSe was obtained.

The obtained PBSSe had an acid value of 23 eq/t, a reduced viscosity of 1.86 dL/g, a reduced viscosity retention rate of 91%, and a biodegradability of 19%. The molar ratio (S/Se) of units derived from the succinic acid component/units derived from the sebacic acid component, determined by $^1$H-NMR (nuclear magnetic resonance spectroscopy), was 89/11. The obtained PBSSe contained 1.5 mass ppm of sodium atoms, less than 0.7 mass ppm of sulfur atoms, and 40 mass ppm of magnesium atoms. The results of these analyses are listed in Table 1.

<Example 2>

PBSSe was produced in the same manner as in Example 1 except that the reaction time after reaching 250°C was set to be 2 hours and 43 minutes, in Example 1. The obtained PBSSe had a reduced viscosity of 2.19 dL/g, a reduced viscosity retention rate of 88%, and a biodegradability of 11%. The obtained PBSSe contained 2.0 mass ppm of sodium atoms, less than 0.7 mass ppm of sulfur atoms, and 40 mass ppm of magnesium atoms. Note that only sodium was detected as the alkali metal. The results of these analyses are listed in Table 1.

<Comparative example 1>

PBSSe was produced in the same manner as in Example 1, except that the amount of trimethylolpropane added was 0.237 parts by mass, and sebacic acid containing 41 mass ppm of sodium atoms and 32 mass ppm of sulfur atoms was used.

The obtained PBSSe had an acid value of 47 eq/t, and the biodegradability was 10%. The obtained PBSSe contained 8.3 mass ppm of sodium atoms and 4.7 mass ppm of sulfur atoms. The results of these analyses are listed in Table 1.

<Comparative example 2>

PBSSe was produced in the same manner as in Comparative Example 1, except that in Example 1, sebacic acid containing 52 mass ppm of sodium atoms and 37 mass ppm of sulfur atoms was used.

The obtained PBSSe had an acid value of 33 eq/t, a reduced viscosity of 3.41 dL/g, a reduced viscosity retention rate of 88%, and a biodegradability of 7%. The obtained PBSSe contained 9.5 mass ppm of sodium atoms and 5.4 mass ppm of sulfur atoms. The results of these analyses are listed in Table 1.

Table 1

|  | S/Se | Content of Sodium atom in sebacic acid (mass ppm) | Content of Sodium atom in resin (mass ppm) | Content of Sulfur atom in sebacic acid (mass ppm) |
|---|---|---|---|---|
| Example 1 | 89/11 | 0.94 | 1.5 | 0.68 |
| Example 2 | 89/11 | 0.94 | 2.0 | 0.68 |
| Comparative example 1 | 89/11 | 41 | 8.3 | 32 |
| Comparative example 2 | 89/11 | 52 | 9.5 | 37 |

Table 1 (continued)

|  | Content of Sulfur atom in resin (mass ppm) | acid value (eq/t) | Reduced viscosity retention ratio (%) | Biodegradability in seawater (%) |
|---|---|---|---|---|
| Example 1 | less than 0.7 | 23 | 91 | 19 |
| Example 2 | less than 0.7 | - | 88 | 11 |
| Comparative example 1 | 4.7 | 47 | 83 | 10 |
| Comparative example 2 | 5.4 | 33 | 88 | 7 |

In Table 1, from a comparison between Example 1 and Comparative Example 1, PBSSe of Comparative Example 1, which has a high content of sodium atoms, had low biodegradability in seawater. On the other hand, PBSSe of Example 1 had high values for both reduced viscosity retention ratio and biodegradability in seawater.

In addition, the same thing was shown in a comparison between Example 2 and Comparative Example 2, which were measured using seawater on different collection days from Example 1 and Comparative Example 1. The PBSSe of Comparative Example 2, which has a high content of sodium atoms, had low biodegradability in seawater, whereas PBSSe of Example 2 had high values for both reduced viscosity retention ratio and biodegradability in seawater.

Furthermore, the reduced viscosity retention ratios of PBSSe of Examples 1 and 2 and Comparative Example 2 were all high regardless of the content of sodium atoms. On the other hand, the PBSSe of Examples 1 and 2, which have the content of sodium atoms of 6.0 mass ppm or less, had high values for both reduced viscosity retention ratio and biodegradability in seawater.

Industrial Applicability

The resin and resin composition containing polybutylene succinate sebacate of the present invention are a resin which achieves both biodegradability in seawater and hydrolysis resistance, which are contradictory properties, and a resin composition using the same. Therefore, a shaped object obtained from the resin and resin composition of the present invention are unlikely to deteriorate during use and have high hydrolysis resistance. On the other hand, the resin and resin composition have a great industrial value for its potential to solve the problem of marine pollution, since it can be decomposed by microorganisms and the like after use because of its high biodegradability, and even if it is disposed of in the ocean, it has high biodegradability in seawater.

**Claims**

1. A resin comprising a polybutylene succinate sebacate,
   wherein a content of an alkali metal is 0.001 mass ppm or more and 6.0 mass ppm or less.

2. The resin according to claim 1,
   wherein the S/Se, which is a ratio of the number of the groups derived from succinic acid to the number of the groups derived from sebacic acid constituting the polybutylene succinate sebacate, is within a range of 71/29 to 95/5.

3. The resin according to claim 1,
   wherein the S/Se, which is a ratio of the number of the groups derived from succinic acid to the number of the groups derived from sebacic acid constituting the polybutylene succinate sebacate, is within a range of 71/29 to 89/11.

4. The resin according to any one of claims 1 to 3,
   wherein an acid value is 50 eq/t or less.

5. The resin according to any one of claims 1 to 4,
   wherein a content of sulfur atoms is 4.0 mass ppm or less.

6. The resin according to any one of claims 1 to 5,
   wherein a weight-average molecular weight is 10,000 or more and 2,500,000 or less.

7. The resin according to any one of claims 1 to 6,
   wherein a reduced viscosity at 30 °C is 0.5 dL/g or more and 4.0 dL/g or less.

8. A resin composition containing the resin according to any one of claims 1 to 7.

9. A shaped object containing the resin according to any one of claims 1 to 7.

## INTERNATIONAL SEARCH REPORT

| | |
|---|---|
| International application No. | |
| | **PCT/JP2022/037411** |

**A. CLASSIFICATION OF SUBJECT MATTER**

*C08G 63/16*(2006.01)i; *C08L 67/02*(2006.01)i
FI:   C08G63/16; C08L67/02

According to International Patent Classification (IPC) or to both national classification and IPC

**B. FIELDS SEARCHED**

Minimum documentation searched (classification system followed by classification symbols)

C08G63/00-64/42; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-504167 A (BASF SE) 16 February 2012 (2012-02-16)<br>claims 1-10, examples | 1-9 |
| A | JP 06-041288 A (SHOWA HIGHPOLYMER CO., LTD.) 15 February 1994 (1994-02-15)<br>claims 1-4, paragraph [0044], example 5 | 1-9 |
| A | JP 2005-298548 A (MITSUBISHI CHEMICALS CORP) 27 October 2005 (2005-10-27)<br>claims 1-6, examples | 1-9 |
| A | JP 08-040437 A (KISHIMOTO, Akira) 13 February 1996 (1996-02-13)<br>claims 1-7, examples | 1-9 |

☐ Further documents are listed in the continuation of Box C.      ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/037411**

| Patent document cited in search report | | | Publication date (day/month/year) | Patent family member(s) | | | Publication date (day/month/year) |
|---|---|---|---|---|---|---|---|
| JP | 2012-504167 | A | 16 February 2012 | US | 2011/0313075 | A1 | |
| | | | | claims 11-19, examples | | | |
| | | | | WO | 2010/034711 | A1 | |
| | | | | EP | 2350162 | A1 | |
| | | | | CN | 102164983 | A | |
| | | | | KR | 10-2011-0076977 | A | |
| JP | 06-041288 | A | 15 February 1994 | US | 5310782 | A | |
| | | | | claims 1-4, example 5 | | | |
| | | | | EP | 572256 | A2 | |
| | | | | KR | 10-0129794 | B1 | |
| | | | | TW | 251299 | B | |
| JP | 2005-298548 | A | 27 October 2005 | (Family: none) | | | |
| JP | 08-040437 | A | 13 February 1996 | US | 5798183 | A | |
| | | | | claims 1-10, examples | | | |
| | | | | EP | 0694580 | A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013147139 A
- JP 2012504167 A
- JP S63225623 A
- JP S5681334 A
- JP 4380704 B

- JP 2002206058 A
- JP 2012505271 A
- JP 2011208008 A
- JP 2012149176 A

**Non-patent literature cited in the description**

- **KAZUO YUKI ; NIKKAN KOGYO SHIMBUN.** Saturated Polyester Handbook. 22 December 1989